(19) Europäisches Patentamt / European Patent Office / Office européen des brevets

(11) **EP 1 560 450 B1**

(12) **EUROPEAN PATENT SPECIFICATION**

(45) Date of publication and mention
of the grant of the patent:
**18.01.2017 Bulletin 2017/03**

(21) Application number: **02772016.8**

(22) Date of filing: **04.11.2002**

(51) Int Cl.:
*H04W 28/02* *(2009.01)*    *H04W 28/18* *(2009.01)*

(86) International application number:
**PCT/CN2002/000785**

(87) International publication number:
**WO 2004/043097 (21.05.2004 Gazette 2004/21)**

(54) **WIRELESS TELECOMMUNICATION SYSTEM AND A LOAD CONTROL METHOD AND APPARATUS USED IN SUCH A SYSTEM**

DRAHTLOSES TELEKOMMUNIKATIONSSYSTEM UND LASTSTEUERVERFAHREN UND VORRICHTUNG ZUR VERWENDUNG IN EINEM SOLCHEN SYSTEM

SYSTEME DE COMMUNICATIONS HERTZIENNES ET PROCEDE DE COMMANDE DE CHARGE ET APPAREIL UTILISE DANS UN TEL SYSTEME

(84) Designated Contracting States:
**AT BE BG CH CY CZ DE DK EE ES FI FR GB GR IE IT LI LU MC NL PT SE SK TR**

(43) Date of publication of application:
**03.08.2005 Bulletin 2005/31**

(73) Proprietor: **ZTE Corporation**
**518057 Shenzhen City,**
**Guangdong Province (CN)**

(72) Inventors:
• **HUANG, Chao**
**Fu Tian,**
**Shenzhen,**
**Guangdong 518057 (CN)**

• **DENG, Chunmei**
**Hi-Tech Park,**
**Shenzhen,**
**Guangdong 518057 (CN)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
**EP-A- 1 071 306     EP-A- 1 128 698**
**EP-A1- 1 119 213     EP-A2- 1 154 667**
**WO-A-00/11884     WO-A-01/47288**
**CN-A- 1 327 645     JP-A- 2000 278 741**

**Description**

Technical Field of the Invention

The present invention relates to a wireless communication system, in particular, to the load control in the wireless communication system.

Background of the Invention

Recently, the wireless communication technology has grown rapidly and has become a very important part of people's life within several years. Load control is to perform real time monitor during operation of a wireless system, that is, perform continuous and real time monitor for a user (or service) that has been accessed to the system, and when the stability of the system operation has been affected, perform necessary regulate to ensure that the system operates stably. When the load control method is good, the system can operate stably under relatively high load, otherwise, the system can only operate at low load level. Obviously, the system that adopts good load control method can accommodate more users and improve the efficiency of system operation.

Since frequency resource is limited, the wireless resource (spatial resource) is very limited, and load control performs monitor and control mainly according to the condition of the wireless resource in the air. After specific modulation and demodulation method has been decided, the modulation efficiency cannot be changed, but good system control method may be adopted to improve the efficiency of operation and make full use of the limited wireless resource.

In addition, with the rapid development of Internet, the desire for mobile Internet and the continuous application of new services has greatly pushed forward the development of the third generation mobile communication system (IMT-2000 or 3G) that can carry high speed data services. Since a 3G system carries mixed service, the QoS requirement of various services must be met, various services' behavior characteristic in the system must be taken into consideration, and various services' characteristic under different wireless environments and the degree of influence to the system must be studied. For example, the type of service of the WCDMA can be divided into four classes (categories) according to the QoS (quality of Service) of the service: conversational class (real time service such as telephone service, IP call service etc.), streaming class (semi-real time service such as video or audio data etc.), interactive class (service such as browsing, server access, database access etc.) and background class (non-real time service such as distribute E-mail at background, download files, receive measurement report etc.). Only when the system is measured, supervised in real time, and adopt different control method under different circumstances, can the system operates at the highest efficiency on the premise of stability and improves the operation benefit.

Chinese patent application No. 97191857.0 entitled "Load Control Method and Wireless System" discloses a load control method and a wireless system. Wherein the load result that describes the load is generated dependent on specific cell. The load result is generated by comparing the signal strength of the required signal with the compound total strength of interfere signal and the required signal, or by weighting the signal to noise ratio with bandwidth or data transfer rate. The load result is compared with a threshold of the highest load value permitted by the cell. If the load result is smaller than the threshold, then the data transfer rate in the cell is increased. If the load result exceeds the threshold, then the data transfer rate in the cell is decreased and avoids establishing new connection. The scheme doesn't utilize the measurement of the actual load in the cell, haven't identify and select the object to adjust, haven't distinguish the difference between various services and only set one threshold, so actual and efficient load control cannot be realized.

EP 1119213 A discloses radio resource allocation methods and apparatus, in a wireless system, e.g., WCDMA, to keep the overall cell load below a maximum value. If the current cell load measured at a base station exceeds a certain threshold, an overload protection procedure is initiated, whereby, to decrease the load, the resource consumption of some services is lowered. In The services are sorted into Class 1 or Class 2, corresponding to real-time and non-real time services, respectively. The selection of the services whose resource allocation has to be negotiated takes into account the class of the service and the required QoS.

EP 1154667 A2 discloses a method and an apparatus for multi-user resource management in wireless communication systems. The total resource allocation is compared with the maximum radio transmission resource available for the wireless system and a portion of the difference between those value is established for use in a "bonus" distribution process.

Summary of the Invention

In order to realize actual and efficient load control in a wireless communication system, according to one aspect of the invention, there is provided a load control method according to claim 1, a load control equipment according to claim 11, and a wireless communication system according to claim 17. Further improvements and embodiments are provided in the dependent claims.

Also provided is a load control method for a wireless communication system, said wireless communication system comprises at least one base station and a plurality of services in a cell that is serviced by the base station, said method comprising: determining if the cell load is in a state that needs to be adjusted; selecting a candidate service to be adjusted from the plurality of services in the cell; and adjusting the service selected in said selecting step and thereby adjusting the cell load if the determination result in said determining step is to adjust the state.

Also provided is a load control equipment for a wireless communication system, said wireless communication system comprises at least one base station and a plurality of services in a cell that is serviced by the base station, said equipment comprising: a first determination unit for determining if the cell load is in a state that needs to be adjusted; a selection unit for selecting a candidate service to be adjusted from the plurality of services in the cell; and an adjustment unit for adjusting the service selected in said selecting step and thereby adjusting the cell load if the determination result in said determining step is to adjust the state.

In addition, also provided is a wireless communication system that comprises said load control equipment.

Brief Description of the Drawings

It is believed that the features, advantages and purposes of the present invention will become apparent from the following description of the preferred embodiments of the present invention taken in conjunction with the accompanying drawings, in which:

Fig 1 is a flowchart of the load control method for the wireless communication system according to an aspect;

Fig 2 is a flowchart of the detailed steps that determine if the cell load needs to be adjusted according to an aspect

Fig 3 is a flowchart of the detailed steps that select services according to an aspect;

Fig 4 is a flowchart of the load control method for the wireless communication system according to another aspect.

Detailed Description of the Preferred Embodiments

Next, preferred embodiments of the invention will be described in conjunction with accompany drawings.

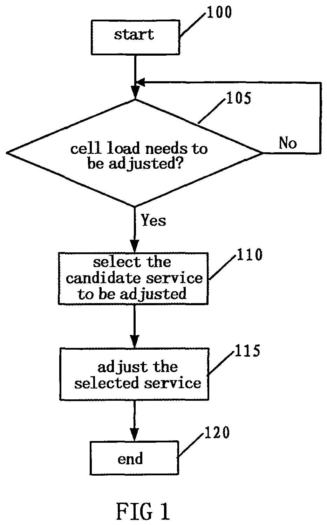

Fig 1 is a flowchart of the load control method for the wireless communication system according to one aspect. As shown in Fig 1, after starts at Step 100, the processing process at Step 105 first determines if the cell load is in a state that needs to be adjusted.

For a wireless communication system that is based on the code division multiple access (CDMA) technology, the measurement for the cell load preferably is cell received total power $P_{total}$. So cell received total power $P_{total}$ is utilized in one example to represent cell load.

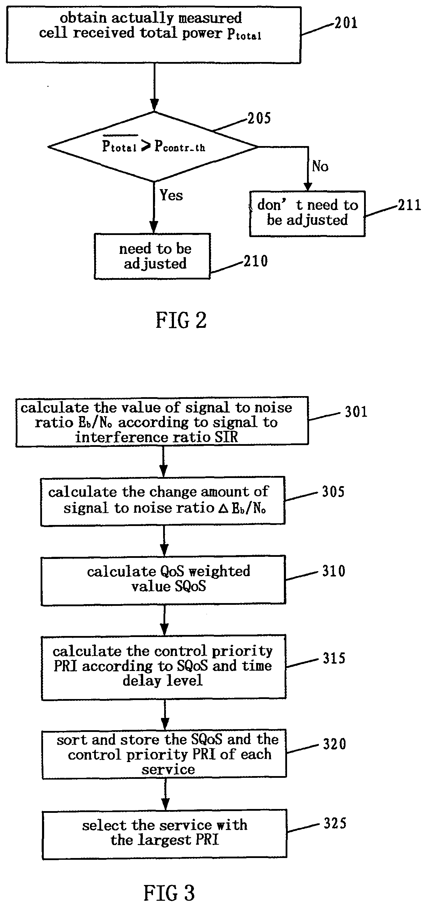

Fig 2 shows the detailed steps that determine if the cell load needs to be adjusted according to one aspect. In Fig 2, first at Step 201, actual measurement of cell received total power $P_{total}$ is acquired. For example, in a WCDMA system, the received total power $P_{total}$ is measured by the base station common measurement function module. The range of the measurement is from -50dBm to -112dBm, the measurement granularity is 0.1dB, 630 levels. The report value is an integer that is from 0 to 629, corresponds to the 630 power levels of the range of the measurement, respectively.

Next, at Step 205, it is determined whether the cell received total power continuously exceeds a predetermined control threshold, that is, the average load within a predetermined time period is greater than the predetermined control threshold $\overline{P_{total}} \geq P_{contr\_th}$. If the average load is greater than the predetermined control threshold, then it is determined that the state needs to be adjusted, otherwise, the state doesn't need to be adjusted.

The cell load (cell received total power) $P_{total}(i)$ in a period of time is arithmetically averaged, a sliding time window is set, M pieces of data in the window is averaged, and take M pieces of measured and reported load value to calculate arithmetic mean:

$$\overline{P_{total}} = 10\log\{\frac{1}{M}\sum_{i=1}^{M}[10^{0.1P_{total}(i)}]\} \qquad \mathbf{dBm} \qquad (1)$$

wherein, $P_{total}(i)$ is first load measurement, the dimension is dBm, and it is converted into absolute power value when performing arithmetic average. M=10 can be taken to perform average operation for the load measurement. The response will be slow when the size of the sliding time window is too large, abnormal in the load cannot be regulated in time and at the same time, more measured data needs to be stored; when the size is too small, the situation in which the actual load exceeds the control threshold cannot be reflected and will be too sensitive to small fluctuation. When the first load is high, so long as it doesn't exceed the limit threshold, it can be ignored and the situation in which it doesn't reach the limit load in a short period of time can be allowed, to ensure that the system operates at relatively high load level, in order to ensure that the system has high utilization efficiency and operation benefit.

Alternatively, the mean value is not calculated, but to directly compare the received total power and the control threshold.

Return to Fig 1, next at Step 110, a candidate service is selected. The purpose of this step is to select the candidate service for adjusting cell load, the service that occupies more resources and has great influence on the system should be selected. In addition, for the service that belongs to multiple service types, the service type that doesn't has strict requirement to time delay should be selected. Fig 3 shows a flowchart of the detailed steps that select services according to an aspect.

As shown in Fig 3, first at Step 301, the signal to noise ratio Eb/N0 of each service is calculated according to the service's signal to interference ratio SIR, the actual measured and reported signal to interference ratio SIR value is converted into the signal to noise ratio Eb/N0 value through the following equation:

$$\left(\frac{E_b}{N_0}\right)_{dB} = 10\log SIR + 20\log\frac{\beta_d}{\beta_c} + 10\log\frac{3840Kbps}{R_b(Kbps)} - 24.08 \qquad dB \qquad (2)$$

$$\frac{E_b}{N_0} = 10^{0.1\left(\frac{E_b}{N_0}\right)_{dB}} \qquad (3)$$

The 24.08dB in equation (2) is the dB (decibel) value of the spread factor SF=256, namely, 10log256=24.08dB. $R_b$ is service rate, that is, a call request's transfer requirement to the service rate, the dimension is Kbps; in a WCDMA system, an up channel comprises two sub-channels (data and control), which are dedicated data channel DPDCH that carries service data and dedicated control channel DPCCH that carries control information, respectively. $\beta d, \beta c$ are power scale factor of data (sub) channel - data channel DPDCH and control channel DPCCH in the up channel respectively, it is prescribed that one of $\beta d$ and $\beta c$ must take the value of 1.0, and the other take the value of 1/15, 2/15, 3/15...15/15 of that value. Generally, the power of the service channel that transfers data is greater than the power of the channel that transfers control information, so generally sets $\beta_d$ = 1.0, the $\beta c$ of 12.2 Kbps voice service will take 11/15, the $\beta c$ of 64 Kbps service will take 8/15, the $\beta c$ of 144 Kbps and 384 Kbps services will take 5/15. Such scale is chosen to ensure that the power of the control channel DPCCH at different service velocities will not vary greatly, so as to ensure the correctness of signaling and measurement. The higher the service rate, the greater the power required, that is, the greater the power of the dedicated channel DPDCH, the smaller the scale of the control channel DPCCH. Since the SF (Spread Factor) of the control channel DPCCH is 256, it has high spread gain and is convenient and accurate to measure. So the measurement of signal to interference ratio SIR is performed in the control channel DPCCH which has relatively good link quality and has fixed spread gain, through the above mentioned conversion relationship, the SIR is mapped to the data sub-channel - dedicated channel DPDCH that transfers service data, to obtain the real time signal to noise ratio of the service under actual wireless environment, thereby obtain the true service QoS weighted value of the service in a complicated and varying wireless environment, it is possible to know the situation in which respective services consume the cell wireless resource of the system in a recent period of time (several hundreds of milliseconds).

Equation (3) converts the dB (decibel) value of the signal to noise ratio into absolute value.

The signal to noise ratio $E_b / N_0$ is the most important parameter in a digital communication system, which represents the inner quality and capability (modulation mode, receiver's quality, etc) of the digital communication system. When certain modulation and demodulation mode and encode mode have been used, there is a corresponding relationship between the signal to noise ratio $E_b/N_0$ and the bit error rate BER or block error rate BLER.

Next, at Step 305, the change amount of the signal to noise ratio $\Delta E_b/N_0$ is calculated, the value of the fore-and-aft measured signal to noise ratio $E_b/N_0$ is compared to obtain the change amount of the signal to noise ratio $\Delta E_b/N_0$.

$$\Delta E_b / N_0 = \left(\frac{E_b}{N_0}\right)_n - \left(\frac{E_b}{N_0}\right)_p \qquad (4)$$

Equation (4) compares the present and last time signal to noise ratio to obtain the change amount (increment) of the signal to noise ratio, $\left(\frac{E_b}{N_0}\right)_n$ and $\left(\frac{E_b}{N_0}\right)_p$ in the equation represents the value of the current average signal to noise ratio and the value of the last time average signal to noise ratio, respectively, and the value of the signal to noise ratio is obtained by converting the measured signal to interference ratio SIR through equation (2) and (3).

The signal to interference ratio SIR of the respective services needs to be converted into signal to noise ratio $E_b/N_0$, equation (3) converts the logarithmic value of the signal to noise ratio into absolute value (value in natural number), equation (4) calculates and stores the increment of the signal to noise ratio $\Delta E_b/N_0$ so as to calculate the QoS weighted value of the respective services.

In actual circumstances, different methods of measurement have different effect, the situation in which the measurement of the absolute amount of the SIR varies will exist, and it may drift and change with time, but the fore-and-aft relative amount in a short time period is easy to measure accurately, at this time, a service's fore-and-aft value of signal to noise ratio needs to be stored to calculate the change amount (increment) of the signal to noise ratio $E_b/N_0$, and substitute the absolute amount of signal to noise ratio $E_b/N_0$ with increment $\Delta E_b/N_0$ (may be positive or negative) to measure the degree of change in the wireless environment, the QoS weighted value measures the change amount of the resource consumed by the service when the wireless environment changes and it directly reflects on the load, when the QoS weighted value is positive and exceeds certain value, which shows that the consumption of wireless resource is high and is still deteriorating, load control needs to be performed.

Next, at Step 310, the QoS weighted value of the service is calculated according to the above calculated change amount of the signal to noise ratio $\Delta E_b/N_0$ and the service rate $R_b$.

The formula to calculate is as follows:

$$S_{QoS} = R_b \times \Delta E_b / N_0 \qquad (5)$$

For example:

For a 12.2 Kbps voice service, when the wireless environment changes, if the increment of signal to noise ratio $\Delta E_b/N_0$ is 3dB (2 times), QoS weighted value $S_{QoS} = R_b \times \frac{E_b}{N_0}$ is 24.4.

For a 64 Kbps voice service, when the wireless environment changes, if the increment of signal to noise ratio $\Delta E_b/N_0$ is 3dB (2 times), QoS weighted value $S_{QoS} = R_b \times \frac{E_b}{N_0} = 128.$

For a 144 Kbps voice service, when the wireless environment changes, if the increment of signal to noise ratio $\Delta E_b/N_0$ is 2.5dB (1.78 times), QoS weighted value $S_{QoS} = R_b \times \frac{E_b}{N_0} = 256.$

For a 384 Kbps voice service, when the wireless environment changes, if the increment of signal to noise ratio $\Delta E_b/N_0$ is 3dB (2 times), QoS weighted value $S_{QoS} = R_b \times \frac{E_b}{N_0} = 768.$

Next, at Step 315, the value of the load control priority of the service PRI is calculated according to the calculated QoS weighted value of the service and the value of the time delay flag of the service type (level of time delay), the formula to calculate is as follows:

$$PRI = S_{QoS} \times T \qquad (6)$$

Wherein T is the value of the time delay flag (level of time delay) that corresponds to the service type, and can take respective values for the four types of services, which is represented by T1, T2, T3, T4:

service of conversational type T1 = x,

service of streaming type T2 = 2 T1,
service of interactive type T3 = 8 T1,
service of background type T4 = 32 T1.

Set T1=x=1, thus the obtained PRI value can ensure that the packet service is adjusted first, when 144 Kbps service is semi-real time service (T=8) and 64 Kbps service is packet service (T=32), for 144 Kbps service, the value of the adjust priority PRI=256*8=2048, for 64 Kbps service, PRI=128*32=4096. At this time, the 64 Kbps service will be adjusted instead of adjusting the 144 Kbps service, since the requirement of the 64 Kbps service to time delay is not high, while the requirement of the 144 Kbps service to time delay is high, and two 64 Kbps service's wireless resource consumption may be lowered to achieve the requirement, instead of adjusting one 144 Kbps service that has high requirement to time delay. Finally the purpose of decreasing the wireless resource consumption and the load is achieved. Of course, 384 Kbps packet service's adjust priority is the highest, only special 384 Kbps service (real time service) will not be adjusted, but to adjust 144 Kbps packet service, since for semi-real time 384 Kbps service, PRI=768*8=6144, while for non-real time 144 Kbps packet service, PRI=256*32=8192.

The value of the time delay flag that corresponds to the service type has a relationship in which the multiple is 2, 8, 32, consider the difference in the requirement to time delay, generally, the low speed service that needs to establish dedicated physical channel often is real time service, while the difference between the conversational service which is very strict in time and the streaming service which is strict in time is relatively small, so $T_2$ is just 2 times of $T_1$, the last two service types' requirement to time decreases gradually, and the multiple taken is relatively large which is 4 and 8 time of the previous service. In addition, typical service is divided into 384 Kbps, 144 Kbps, 64 Kbps data and voice service, 384 Kbps/144 Kbps=2.67, 144 Kbps/64 Kbps=2.25, further, the value of the signal to interference ratio required by various services has some difference. In principle, the non-real time service is adjusted first, that is, make the rate one level lower than that of the service that is strict in time, for example, it is considered to adjust 64 Kbps background packet (corresponds to the value of time delay flag $T_4$) service first, while 144 Kbps interactive (corresponds to the value of time delay flag $T_3$) service will not be adjusted, so the scale set needs to be higher than 4. The rate of the 384 Kbps service is 2.67 times of that of 144 Kbps, 384 Kbps is more sensitive to the variation of the wireless environment, so the multiple would 8. If service type is increased, the multiple for the value of the time delay flag (level of time delay) can be decided according to the rate of the service, signal to noise ratio required and the requirement to time delay, as long as when the services are adjacent to each other, it is ensured that the service that has low time delay requirement (the value of the time delay flag is high) will be adjusted first.

Next, at Step 320, the QoS weighted value of the respective services and the control priority PRI are sorted and stored.

The emulation result shows that, depending on the wireless environment, a 384 Kbps services is equivalent to 10-20 of 12.2 Kbps voice, that is, the wireless resource consumed by a 384 Kbps data service is 10-20 times of that of a 12.2 Kbps voice. Similarly, the wireless resource consumed by a 144 Kbps data service is about 8 times of that of a 12.2 Kbps voice, the wireless resource consumed by a 64 Kbps data service is about 4 times of that of a 12.2 Kbps voice service. Different wireless environments have different equivalent multiples.

The QoS weighted value $S_{QoS}$ represents the variation of the wireless resource consumed by the service of a mobile user, the higher the weighted value, the greater the proportion of the resource occupied in the system and the proportion that affects the system load, and the greater the influence on the stability of the system. In a good wireless environment (for example, direct vision) and when the velocity of movement is very low, the signal to noise ratio required by any mobile user is relatively low, when there is no direct vision and the velocity of movement is high, to maintain the original block error rate BLER, the signal to noise ratio needed will increase and the wireless resource consumed will increase. The wireless resource consumed by a service in real time can be known by measuring and converting the signal to interference ratio SIR into signal to noise ratio $E_b/N_0$ in real time. The variation of the resource consumed by the service can be known through the change amount (increment) of signal to noise ratio $\Delta E_b/N_0$ and the rate of the service. The user with great weighted value, for example, a 384 Kbps service, occupies a large amount of wireless resource and the change amount generated with the environment is also great, it has great influence on the stability of the system and needs to be monitored with emphasize.

In addition, for the user (service) that has high data rate, the spread gain is low, the ability to anti-interference and fast fading is low, so it is more sensitive to the variation of the environment, thus it has great influence on the cell load of the system.

In addition, the value of the load priority PRI is obtained through the QoS weighted value $S_{QoS}$ of the accessed service and the service type (requirement to time delay), the value of the load priority is sorted and listed according to its magnitude, so that when the actual load exceeds the limit threshold for one time or continuously exceeds the control threshold, that is, when the stability of the system has been affected, adjustment will begin form the service that consumes most wireless resource or from the service that consumes relatively large amount of resource but has low requirement to time delay.

Finally, at Step 325, the service with the largest PRI is selected as the candidate object to be adjusted.

Alternatively, according to an aspect, during the above process of selecting a service, the change amount of signal to noise ratio $\Delta E_b/N_0$ may not be calculated (Step 305), but use the value of the signal to noise ratio $E_b/N_0$ and the service rate $R_b$ to calculate the QoS weighted value of the service, that is, $S_{QoS} = R_b \times E_b/N_0$. This is particularly suitable for the situation where the signal to noise ratio of the service is deteriorating slowly.

In addition, alternatively, according to an aspect, in case that the actual signal to noise ratio of the service can be directly measured, Step 301 can be omitted.

In addition, alternatively, according to aspect, the control priority PRI is not calculated (Step 315), and the service with the largest service QoS weighted value is selected as the candidate object to be adjusted.

Back to Fig 1, at Step 115, the service selected in the previous step (Step 110) is adjusted, thereby the cell load is adjusted. What to do according to one aspect is, increase the target value of the block error rate BLER of the selected service by one level, reduce the target value of the signal to interference ratio SIR through outer loop power control, and thereby reduce the transmit power of the corresponding service (user). For example, the block error rate BLER is increased from 5% to 10%, from 1% to 2%. Generally, the target value of the BLER of the packet service that is not strict in time delay is between 5% and 10%, to reduce the consumption of the wireless resource and achieve the purpose of making best use of the wireless resource.

For example: after twenty 12.2 Kbps voice, two 64 Kbps, one 144 Kbps service have been accessed in the system, one more 384 Kbps service is accessed in the system. For example, initially, the signal to noise ratio of the 384 Kbps service is in a relatively good direct vision wireless environment, the signal to noise ratio required is 3.0 dB, and it slowly enters a non-direct vision environment, the signal to noise ratio required gradually increased to 6.0 dB but still maintains the same block error rate BLER. Then, when the signal to noise ratio is 3.0 dB, the cell total received power of the system is about -99.67 dBm, the load is about 55.2%, the power resource consumed by one 384 Kbps service is 3.48 dBm (the power of the service received at the receive end of the base station); when the signal to noise ratio required by the 384 Kbps service increases to 6.0 dB (assume that there are no change in other services), the cell load of the system raises to 72.2%, the cell received total power reaches -97.59 dBm, the resource consumed by that 384 Kbps service raises to 5.56 dBm. If the signal to noise ratio required by the 384 Kbps service is made to reduce to 4.5 dB after the block error ratio has been improved, the wireless resource consumed by that service will be reduced to 4.30 dBm, the cell load of the system will be reduced to 62.8%. Thus the cell load of the system can be greatly reduced and can make the system operates stably, also, other services (users) with relatively low data rate can be accessed in, to improve the efficiency of the system operation and reduce call lose rate or switched call dropping rate.

In the standard (TS25.141) of the 3GPP that tests the performance of a base station, under Case1, Case2 and Case3, the signal to noise ratio Eb/No required when BLER=1% is 3 dB higher than BLER=10%. When BLER=1%, the signal to noise ratio Eb/No required by Case1 to Case3 changes from 8.8 dB to 3.6 dB, or when BLER=10%, the signal to noise ratio Eb/No required by Case1 to Case3 changes from 5.8 dB to 3.2 dB. It can be seen that under different wireless environment and different block error ratio BLER, the signal to noise ratio Eb/No required varies greatly.

In addition, according to another embodiment of the invention, new target value of the block error rate BLER and the value of return time M can be set for the selected service.

The BLER is increased a certain amount in a certain period of time, and after that period of time, it automatically returns to the original target value of the BLER. That is, when the load reaches a warning value, increase the BLER of the service that consumes most resource and that can be adjusted to reduce the consumption of resource. The original BLER value is automatically recovered after a period of time. The target value of the BLER of the service before and after the adjustment needs to be stored. When setting new target value of the BLER and the return time, several levels are set for the new target value of the BLER: 1%, 2%, 5%, 10%, 20%, 30%, one level is increased at each time, when it is increased to the highest level and still the load requirement can not be met, another service needs to be selected to perform the operation that reduces the consumption of the resource.

If the increment of the signal to noise ratio is employed to calculate the QoS weighted value, when the BLER is increased to its highest value, the change amount of the signal to noise ratio will become very small, and the QoS weighted value will be small, generally, operation won't be performed for that service at next time, other service with high PRI will be automatically selected to perform the operation that reduces the consumption of the resource; another advantage to employ the increment of the signal to noise ratio (may be positive or negative) is that the QoS weighted value can be positive or negative, and to "encourage" the consumption of the resource to develop in a decreasing direction. The return time is set to equal to the window length M of the arithmetic average $\overline{P_{total}}$ of the load value, that is, after passing the time that corresponds to M of measure periods, the target value of the BLER will recover to the original value. The two values are set and put in corresponding storage units and are directly called by corresponding function module such as power control, etc. After automatically returns to the original target value of the BLER, it is possible that the wireless environment haven't changed, and load control operation needs to be performed again to reduce the resource consumption of the service that has the highest PRI value; if the wireless environment is improved and allows to consume more resource, data transfer is performed automatically according the requirement that the BLER should be low, the average transfer rate of the data is improved and time delay is reduced.

Finally, at Step 120, the processing process terminates.

Alternatively, according to an aspect, the processing process can be performed in cycle, that is, returns to Step 105 after Step 115 and restarts. Thereby continuous and real time load control is realized.

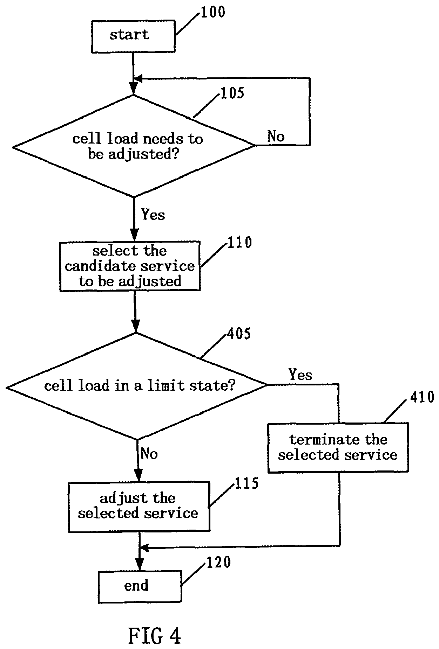

Fig 4 is a flowchart of the load control method for the wireless communication system according to an aspect. Wherein, the same part as that of the method shown in Fig 1 is labeled with same reference number, and the description of which will be omitted. The difference is, Step 405 is added to determine if the cell load is in a limit state. According to one aspect, what is actually done by the determination is: determines if the actually measured and reported cell load (uplink received total power) $P_{total}$ has exceeded the limit control threshold, namely, $P_{total} \geq P_{\lim it\_th}$. If the limit control threshold has been exceeded, then at Step 410, the service selected in Step 405 is terminated.

In a WCDMA system, the limit threshold is the limit of the LNA linearity range, which can be set as $P_{\lim it\_th}$ = -65$dBm$ . As long as the reported cell load of the system exceeds the limit value for one time, the wireless link of the candidate service needs to be deleted to reduce wireless resource consumption, reduce the cell load of the system, and to ensure that the LNA's linearity range won't be exceeded.

In addition, a load control equipment for a wireless communication system is provided. Said load control equipment comprises: a first determination unit for determining if the cell load is in a state that needs to be adjusted; a selection unit for selecting a candidate service to be adjusted from the plurality of services in the cell; and an adjustment unit for adjusting the service selected in said selecting step and thereby adjusting the cell load if the determination result in said determination unit is to adjust the state.

According to an aspect, said first determination unit further comprises a comparison unit for comparing the cell load with a predetermined control threshold.

Preferably, said comparison unit is for comparing the average value of the cell load in a predetermined time period with a predetermined control threshold.

According to an aspect , said selection unit further comprises a QoS weighted value calculation unit for calculating the service QoS weighted value of each service respectively according to the rate and the signal to noise ratio of said service.

Preferably, said QoS weighted value calculation unit calculates the service QoS weighted value of each service respectively according to the change amount of the rate and the signal to noise ratio of said service.

According to an aspect, said selection unit further comprises a signal to noise ratio calculation unit for calculating said signal to noise ratio according to the signal to interference ratio.

According to an aspect, said selection unit further comprises a control priority calculation unit for calculating the control priority of each service respectively according to said calculated service QoS weighted value and said service time delay level corresponded to said service.

According to an aspect, said adjustment unit adjusts the cell load by adjusting the bit error rate or block error rate of said selected service.

According to an aspect, the load control equipment of the invention further comprises: a second determination unit for determining if the cell load is in a limit state; and a termination unit for terminating said selected candidate service to be adjusted if the cell load is in a limit state.

As is known by one skilled in the art, the above described load control equipment of the invention can be implemented in the form of software or hardware in a wireless communication system, such as on a wireless network controller, a base station or a distributed control equipment.

The invention has been described with some embodiments in the above, it is noted that the above embodiments are not exhaustive and are not a limitation to the invention. Various changes and modifications may be made by one skilled in the art. In addition, although the description and data in the above is partly for a WCDMA system, the principle used by the invention and the problem solved are not limited to a WCDMA system, it can be applicable to other types of wireless communication system.

The scope of the invention is only defined by the appended claims.

## Claims

1. A load control method for a wireless communication system, said wireless communication system comprising at least one base station and a plurality of services in a cell that is serviced by the base station, said method comprising:

    determining if the cell load is in a state that needs to be adjusted (105);
    selecting a candidate service to be adjusted from the plurality of services in the cell (110); and
    adjusting the service selected in said selecting step and thereby adjusting the cell load if the determination result in said determining step is to adjust the state (115);
wherein said selecting step comprises:

calculating the service QoS weighted value of each service according to the rate and signal to noise ratio of said service, or calculating the service QoS weighted value of each service (310) according to the change amount of the signal to noise ratio and said service rate (305);
wherein said plurality of services have different types, and each service type is predefined with a service time delay level, said selecting step further comprising:

calculating the load control priority of each service respectively according to said calculated service QoS weighted value and said service time delay level corresponded to said service (315) by using the following formula:

$$PRI = S_{QoS} \times T$$

wherein PRI is the load control priority, $S_{QoS}$ is the service QoS weighted value, and
T is the value of the service time delay level; and
selecting (325) the candidate service to be adjusted according to said calculated load control priority.

2. The load control method according to claim 1, wherein said determining step comprises:

obtaining the cell load;
comparing the cell load with a predetermined control threshold; and
determining that the state needs to be adjusted if the cell load exceeds said control threshold.

3. The load control method according to claim 1, wherein said determining step comprises:

obtaining the cell load (201);
comparing the average value of the cell load in a predetermined time period with a predetermined control threshold (205); and
determining that the state needs to be adjusted if the average value of the cell load exceeds said control threshold (210).

4. The load control method according to claim 2 or 3, wherein said cell load is represented in uplink received total power of the cell.

5. The load control method according to claim 1, wherein said service comprises a dedicated data channel and a dedicated control channel, and said signal to noise ratio refers to the signal to noise ratio of said dedicated data channel.

6. The load control method according to claim 5, wherein said signal to noise ratio is calculated according to the signal to interference ratio of said dedicated control channel (301).

7. The load control method according to claim 1, wherein, the stricter the time delay requirement corresponded to said service type, the lower said service time delay level.

8. The load control method according to claim 1, wherein said adjusting step comprises adjusting the bit error rate or block error rate of said selected service.

9. The load control method according to claim 1, further comprising:

determining if the cell load is in a limit state (405); and
terminating said selected candidate service to be adjusted if the cell load is in a limit state (410).

10. The load control method according to claim 9, wherein said step of determining if the cell load is in a limit state comprises comparing the cell load with a predetermined limit threshold, and determining as in a limit state if the cell load exceeds said limit threshold.

11. A load control equipment for a wireless communication system, said wireless communication system comprising at least one base station and a plurality of services in a cell that is serviced by the base station, said equipment comprising:

a first determination unit for determining if the cell load is in a state that needs to be adjusted;
a selection unit for selecting a candidate service to be adjusted from the plurality of services in the cell; and
an adjustment unit for adjusting the service selected in said selecting step and thereby adjusting the cell load if the determination result in said determining step is to adjust the state;
wherein said selection unit further comprises a QoS weighted value calculation unit for calculating the service QoS weighted value of each service respectively according to the rate and the signal to noise ratio of said service, or calculating the service QoS weighted value of each service respectively according to the change amount of the signal to noise ratio and said service rate;
wherein said selection unit further comprises a load control priority calculation unit for calculating the load control priority of each service respectively according to said calculated service QoS weighted value and said service time delay level corresponded to said service by using the following formula:

$$PRI = S_{QoS} \times T$$

wherein PRI is the load control priority, $S_{QoS}$ is the service QoS weighted value, and
T is the value of the service time delay level; and

said selection unit is adapted to select the candidate service to be adjusted according to said calculated load control priority.

12. The load control equipment according to claim 11, wherein said first determination unit further comprises a comparison unit for comparing the cell load with a predetermined control threshold.

13. The load control equipment according to claim 11, wherein said first determination unit further comprises a comparison unit for comparing the average value of the cell load in a predetermined time period with a predetermined control threshold.

14. The load control equipment according to claim 11, wherein said selection unit further comprises a signal to noise ratio calculation unit for calculating said signal to noise ratio according to the signal to interference ratio.

15. The load control equipment according to claim 11, wherein said adjustment unit is adapted to adjust the cell load by adjusting the bit error rate or block error rate of said selected service.

16. The load control equipment according to claim 11, further comprising: a second determination unit for determining if the cell load is in a limit state; and a termination unit for terminating said selected candidate service to be adjusted if the cell load is in a limit state.

17. A wireless communication system comprising at least one base station and a plurality of services in a cell that is serviced by the base station, and further comprising the load control equipment according to claim 11.

**Patentansprüche**

1. Laststeuerverfahren für ein drahtloses Kommunikationssystem, wobei das drahtlose Kommunikationssystem mindestens eine Basisstation und eine Vielzahl von Diensten in einer Zelle, die durch die Basisstation versorgt wird, umfasst, wobei das Verfahren Folgendes umfasst:

Bestimmen, ob sich die Zellenlast in einem Zustand befindet, der justiert werden muss (105);
Auswählen eines infrage kommenden zu justierenden Dienstes aus der Vielzahl von Diensten in der Zelle (110); und

Justieren des in dem Auswahlschritt ausgewählten Dienstes und dadurch Justieren der Zellenlast, wenn das Bestimmungsergebnis in dem Bestimmungsschritt ist, den Zustand zu justieren (115);
wobei der Auswählschritt Folgendes umfasst:

Berechnen des gewichteten Dienst-QoS-Werts jedes Dienstes gemäß der Rate und dem Rauschabstand des Dienstes oder Berechnen des gewichteten Dienst-QoS-Werts jedes Dienstes (310) gemäß dem Änderungsbetrag des Rauschabstands und der Dienstrate (305);
wobei die Vielzahl von Diensten verschiedene Typen aufweisen und jeder Diensttyp mit einem Dienstzeitverzögerungswert vordefiniert ist, wobei der Auswählschritt ferner Folgendes umfasst:

Berechnen der Last-Steuerpriorität jedes Dienstes jeweils gemäß dem berechneten gewichteten Dienst-QoS-Wert und dem Dienstzeitverzögerungswert, der dem Dienst (315) entspricht, durch Verwendung der folgenden Formel:

$$PRI = S_{QoS} \times T$$

wobei PRI die Last-Steuerpriorität, $S_{QoS}$ der gewichtete Dienst-QoS-Wert ist und T der Wert des Dienstzeitverzögerungswerts ist; und
Auswählen (325) des infrage kommenden zu justierenden Dienstes gemäß der berechneten Last-Steuerpriorität.

2.  Laststeuerverfahren nach Anspruch 1, wobei der Bestimmungsschritt Folgendes umfasst:

Erhalten der Zellenlast;
Vergleichen der Zellenlast mit einer vorbestimmten Steuerschwelle; und
Bestimmen, dass der Zustand justiert werden muss, wenn die Zellenlast die Steuerschwelle übersteigt.

3.  Laststeuerverfahren nach Anspruch 1, wobei der Bestimmungsschritt Folgendes umfasst:

Erhalten der Zellenlast (201);
Vergleichen des Mittelwerts der Zellenlast in einem vorbestimmten Zeitraum mit einer vorbestimmten Steuerschwelle (205); und
Bestimmen, dass der Zustand justiert werden muss, wenn der Mittelwert der Zellenlast die Steuerschwelle übersteigt (210).

4.  Laststeuerverfahren nach Anspruch 2 oder 3, wobei die Zellenlast in Aufwärtsstrecken-Gesamtempfangsleistung der Zelle dargestellt ist.

5.  Laststeuerverfahren nach Anspruch 1, wobei der Dienst einen eigenen Datenkanal und einen eigenen Steuerkanal umfasst und sich der Rauschabstand auf den Rauschabstand des eigenen Datenkanals bezieht.

6.  Laststeuerverfahren nach Anspruch 5, wobei der Rauschabstand gemäß dem Verhältnis von Signal zu Störung des eigenen Steuerkanals (301) berechnet wird.

7.  Laststeuerverfahren nach Anspruch 1, wobei der Dienstzeitverzögerungswert umso niedriger ist, je strikter die Zeitverzögerungsanforderung ist, die dem Diensttyp entspricht.

8.  Laststeuerverfahren nach Anspruch 1, wobei der Justierungsschritt Justieren der Bitfehlerrate oder Blockfehlerrate des ausgewählten Dienstes umfasst.

9.  Laststeuerverfahren nach Anspruch 1, ferner umfassend:

Bestimmen, ob sich die Zellenlast in einem Grenzzustand befindet (405); und
Beendigen des ausgewählten infrage kommenden zu justierenden Dienstes, wenn sich die Zellenlast in einem Grenzzustand befindet (410).

**10.** Laststeuerverfahren nach Anspruch 9, wobei der Schritt des Bestimmens, ob sich die Zellenlast in einem Grenzzustand befindet, Vergleichen der Zellenlast mit einer vorbestimmten Grenzschwelle und Bestimmen als im Grenzzustand, wenn die Zellenlast die Grenzschwelle übersteigt, umfasst.

**11.** Laststeuergerät für ein drahtloses Kommunikations-system, wobei das drahtlose Kommunikationssystem mindestens eine Basisstation und eine Vielzahl von Diensten in einer Zelle, die durch die Basisstation versorgt wird, umfasst, wobei das Gerät Folgendes umfasst:

eine erste Bestimmungseinheit zum Bestimmen, ob sich die Zellenlast in einem Zustand befindet, der justiert werden muss;
eine Auswahleinheit zum Auswählen eines infrage kommenden zu justierenden Dienstes aus der Vielzahl von Diensten in der Zelle; und
eine Justierungseinheit zum Justieren des in dem Auswahlschritt ausgewählten Dienstes und dadurch Justieren der Zellenlast, wenn das Bestimmungsergebnis in dem Bestimmungsschritt ist, den Zustand zu justieren;
wobei die Auswahleinheit ferner eine Gewichteter-QoS-Wert-Berechnungseinheit umfasst zum Berechnen des gewichteten Dienst-QoS-Werts jedes Dienstes gemäß der Rate und dem Rauschabstand des Dienstes oder Berechnen des gewichteten Dienst-QoS-Werts jedes Dienstes gemäß dem Änderungsbetrag des Rauschabstands und der Dienstrate;
wobei die Auswahleinheit ferner eine Last-Steuerpriorität-Berechnungseinheit umfasst zum Berechnen der Last-Steuerpriorität jedes Dienstes jeweils gemäß dem berechneten gewichteten Dienst-QoS-Wert und dem Dienstzeitverzögerungswert, der dem Dienst entspricht, durch Verwendung der folgenden Formel:

$$PRI = S_{QoS} \times T$$

wobei PRI die Last-Steuerpriorität, $S_{QoS}$ der gewichtete Dienst-QoS-Wert ist; und
T der Wert des Dienstzeitverzögerungswerts ist; und
die Auswahleinheit ausgelegt ist zum Auswählen des infrage kommenden zu justierenden Dienstes gemäß der berechneten Last-Steuerpriorität.

**12.** Laststeuergerät nach Anspruch 11, wobei die erste Bestimmungseinheit ferner eine Vergleichseinheit zum Vergleichen der Zellenlast mit einer vorbestimmten Steuerschwelle umfasst.

**13.** Laststeuergerät nach Anspruch 11, wobei die erste Bestimmungseinheit ferner eine Vergleichseinheit umfasst zum Vergleichen des Mittelwerts der Zellenlast in einem vorbestimmten Zeitraum mit einer vorbestimmten Steuerschwelle.

**14.** Laststeuergerät nach Anspruch 11, wobei die Auswahleinheit ferner eine Rauschabstand-Berechnungseinheit zum Berechnen des Rauschabstands gemäß dem Verhältnis von Signal zu Störung umfasst.

**15.** Laststeuergerät nach Anspruch 11, wobei die Justierungseinheit ausgelegt ist zum Justieren der Zellenlast durch Justieren der Bitfehlerrate oder Blockfehlerrate des ausgewählten Dienstes.

**16.** Laststeuergerät nach Anspruch 11, ferner umfassend: eine zweite Bestimmungseinheit zum Bestimmen, ob sich die Zellenlast in einem Grenzzustand befindet; und eine Beendigungseinheit zum Beendigen des ausgewählten infrage kommenden zu justierenden Dienstes, wenn sich die Zellenlast in einem Grenzzustand befindet.

**17.** Drahtloses Kommunikationssystem, das mindestens eine Basisstation und eine Vielzahl von Diensten in einer Zelle, die durch die Basisstation versorgt wird, umfasst, und ferner das Laststeuergerät nach Anspruch 11 umfasst.

**Revendications**

**1.** Procédé de contrôle de charge pour un système de communication sans fil, ledit système de communication sans fil comprenant au moins une station de base et une pluralité de services dans une cellule qui est desservie par la station de base, ledit procédé comprenant :

EP 1 560 450 B1

la détermination du fait que la charge de la cellule se trouve ou non dans un état qui nécessite d'être ajusté (105) ;
la sélection d'un service candidat à ajuster parmi la pluralité de services dans la cellule (110) ; et
l'ajustement du service sélectionné à ladite étape de sélection et ainsi l'ajustement de la charge de la cellule si le résultat de la détermination à ladite étape de détermination est qu'il faut ajuster l'état (115) ;
ladite étape de sélection comprenant :

le calcul de la valeur pondérée de QoS de service de chaque service en fonction du débit et du rapport signal sur bruit dudit service, ou le calcul de la valeur pondérée de QoS de service de chaque service (310) en fonction de la quantité de changement du rapport signal sur bruit et dudit débit de service (305) ;
ladite pluralité de services ayant des types différents, et chaque type de service étant prédéfini avec un niveau de délai de service, ladite étape de sélection comprenant en outre :

le calcul de la priorité de contrôle de charge de chaque service respectif en fonction de ladite valeur pondérée de QoS de service calculée et dudit niveau de délai de service correspondant audit service (315) à l'aide de la formule suivants :

$$PRI = S_{QoS} \; x \; T$$

où *PRI* est la priorité de contrôle de charge, $S_{QoS}$ est la valeur pondérée de QoS de service, et T est la valeur du niveau de délai de service ; et
la sélection (325) du service candidat à ajuster en fonction de ladite priorité de contrôle de charge calculée.

2. Procédé de contrôle de charge selon la revendication 1, dans lequel ladite étape de détermination comprend:

l'obtention de la charge de la cellule ;
la comparaison de la charge de la cellule à un seuil de contrôle prédéterminé ; et
la détermination du fait que l'état nécessite d'être ajusté si la charge de la cellule excède ledit seuil de contrôle.

3. Procédé de contrôle de charge selon la revendication 1, dans lequel ladite étape de détermination comprend :

l'obtention de la charge de la cellule (201) ;
la comparaison de la valeur moyenne de la charge de la cellule sur un laps de temps prédéterminé à un seuil de contrôle prédéterminé (205) ; et
la détermination du fait que l'état nécessite d'être ajusté si la valeur moyenne de la charge de la cellule excède ledit seuil de contrôle (210).

4. Procédé de contrôle de charge selon la revendication 2 ou 3, dans lequel ladite charge de la cellule est représentée dans une puissance totale de la cellule reçue sur la liaison montante.

5. Procédé de contrôle de charge selon la revendication 1, dans lequel ledit service comprend un canal de données dédié et un canal de commande dédié, et ledit rapport signal sur bruit fait référence au rapport signal sur bruit dudit canal de données dédié.

6. Procédé de contrôle de charge selon la revendication 5, dans lequel ledit rapport signal sur bruit est calculé en fonction du rapport signal sur interférences dudit canal de commande dédié (301).

7. Procédé de contrôle de charge selon la revendication 1, dans lequel, plus les exigences concernant le délai correspondant audit type de service sont strictes, plus ledit niveau de délai de service est bas.

8. Procédé de contrôle de charge selon la revendication 1, dans lequel ladite étape d'ajustement comprend l'ajustement du taux d'erreur sur les bits ou du taux d'erreur sur les blocs dudit service sélectionné.

9. Procédé de contrôle de charge selon la revendication 1, comprenant en outre :

la détermination du fait que la charge de la cellule se trouve ou non dans un état limite (405) ; et

13

l'arrêt dudit service candidat sélectionné pour être ajusté si la charge de la cellule se trouve dans un état limite (410).

10. Procédé de contrôle de charge selon la revendication 9, dans lequel ladite étape de détermination du fait que la charge de la cellule se trouve ou non dans un état limite comprend la comparaison de la charge de la cellule à un seuil limite prédéterminé, et la détermination du fait qu'elle se trouve dans un état limite si la charge de la cellule excède ledit seuil limite.

11. Equipement de contrôle de charge pour un système de communication sans fil, ledit système de communications sans fil comprenant au moins une station de base et une pluralité de services dans une cellule qui desservie par la station de base, ledit équipement comprenant :

une première unité de détermination pour la détermination du fait que la charge de la cellule se trouve ou non dans un état qui nécessite d'être ajusté ;
une unité de sélection pour la sélection d'un service candidat à ajuster parmi la pluralité de services dans la cellule ; et
une unité d'ajustement pour l'ajustement du service sélectionné à ladite étape de sélection et ainsi l'ajustement de la charge de la cellule si le résultat de la détermination à ladite étape de détermination est qu'il faut ajuster l'état ;
ladite unité de sélection comprenant en outre une unité de calcul de valeur pondérée de QoS pour le calcul de la valeur pondérée de QoS de service de chaque service respectif en fonction du débit et du rapport signal sur bruit dudit service, ou le calcul de la valeur pondérée de QoS de service de chaque service respectif en fonction de la quantité de changement du rapport signal sur bruit et dudit débit de service ;
ladite unité de sélection comprenant en outre une unité de calcul de priorité de contrôle de charge pour le calcul de la priorité de contrôle de charge de chaque service respectif en fonction de ladite valeur pondérée de QoS de service calculée et dudit niveau de délai de service correspondant audit service à l'aide de la formule suivants :

$$PRI = S_{QoS} \ x \ T$$

où *PRI* est la priorité de contrôle de charge, $S_{QoS}$ est la valeur pondérée de QoS de service, et T est la valeur du niveau de délai de service ; et
ladite unité de sélection étant adaptée pour sélectionner le service candidat à ajuster en fonction de ladite priorité de contrôle de charge calculée.

12. Equipement de contrôle de charge selon la revendication 11, dans lequel ladite première unité de détermination comprend en outre une unité de comparaison pour la comparaison de la charge de la cellule à un seuil de contrôle prédéterminé.

13. Equipement de contrôle de charge selon la revendication 11, dans lequel ladite première unité de détermination comprend en outre une unité de comparaison pour la comparaison de la valeur moyenne de la charge de la cellule sur un laps de temps prédéterminé à un seuil de contrôle prédéterminé.

14. Equipement de contrôle de charge selon la revendication 11, dans lequel ladite unité de sélection comprend en outre une unité de calcul de rapport signal sur bruit pour le calcul dudit rapport signal sur bruit en fonction du rapport signal sur bruit.

15. Equipement de contrôle de charge selon la revendication 11, dans lequel ladite unité d'ajustement est adaptée pour ajuster la charge de la cellule par ajustement du taux d'erreur sur les bits ou du taux d'erreur sur les blocs dudit service sélectionné.

16. Equipement de contrôle de charge selon la revendication 11, comprenant en outre : une deuxième unité de détermination pour la détermination du fait que la charge de la cellule se trouve ou non dans un état limite ; et une unité d'arrêt pour l'arrêt dudit service candidat sélectionné pour être ajusté si la charge de la cellule se trouve dans un état limite.

17. Système de communication sans fil comprenant au moins une station de base et une pluralité de services dans une cellule qui est desservie par la station de base, et comprenant en outre l'équipement de contrôle de charge selon la revendication 11.

FIG 1

obtain actually measured
cell received total power $P_{total}$ —— 201

$\overline{P_{total}} > P_{contr\_th}$ —— 205

No

don't need to
be adjusted —— 211

Yes

need to be
adjusted —— 210

FIG 2

calculate the value of signal to noise
ratio $E_b/N_o$ according to signal to
interference ratio SIR —— 301

calculate the change amount of
signal to noise ratio $\Delta E_b/N_o$ —— 305

calculate QoS weighted
value SQoS —— 310

calculate the control priority
PRI according to SQoS and time
delay level —— 315

sort and store the SQoS and the
control priority PRI of each
service —— 320

select the service with
the largest PRI —— 325

FIG 3

start — 100

cell load needs to
be adjusted? — 105 — No

Yes

select the
candidate service
to be adjusted — 110

cell load in a limit state? — 405 — Yes

No

terminate the
selected service — 410

adjust the
selected service — 115

end — 120

FIG 4

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 97191857
- EP 1119213 A
- EP 1154667 A2